# EUROPEAN PATENT APPLICATION

(11) **EP 3 561 793 A1**
(43) Date of publication of application: **30.10.2019**
(21) Application number: 18305494.9
(22) Date of filing: 23.04.2018
(51) Int. Cl.: G08G 1/16, B60K 37/02, B60Q 9/00, G08G 5/00

(54) **METHOD AND APPARATUS MONITORING A SPACE**

(71) Applicant: Ecole Nationale de l'Aviation Civile, 31400 Toulouse Cedex (FR)
(72) Inventor: HURTER, Christophe, 31000 TOULOUSE (FR); BENHACENE, Raïlane, 31000 TOULOUSE (FR); IMBERT, Jean-Paul, 31400 TOULOUSE (FR); REYNAL, Maxime, 31400 TOULOUSE (FR)
(74) Representative: Bell, Mark

(57) **Abstract**

Traffic status feedback is provided by a driver adapted to interface with a human perceptible vibration transducer either as a haptic or audio signal, by causing the transducer to emit a vibration having one or more characteristics defined in proportion to traffic data. The traffic data may relate to a particular space, and be modulated as a function of their position in that space. By compiling a signal concerning multiple traffic entities or other traffic data, a user can be provided with a concentrated representation of complex data, which the user will come instinctively to interpret.

## Description

### Field of the invention

The present invention relates generally to the remote monitoring of traffic entities in a remote space.

### Background of the invention

Generally speaking, two classes of oversight of vehicle traffic can be defined. The first class may comprise the pilot or driver of a vehicle, and optionally a co-pilot or other crew member. The second class may comprise supervisors, air traffic controllers, vessel traffic controllers and the like, who have a general responsibility for vehicles in a given area. The working conditions of both of these classes of individuals are affected by current technological trends, and furthermore significant convergence of their roles. On one hand, vehicles are increasingly autonomous, so that the role of the driver or pilot is tending to disappear altogether, or to be entrusted to a remote operator who can take over control of the vehicle via a telecommunications channel at critical instants. Meanwhile, supervision tasks in the second class may be increasingly supported by information technology, so that one individual can be expected to supervise an ever larger area, or increasingly, to supervise several different areas, with the relevant traffic information being relayed from the respective areas via telecommunications means. Accordingly, in both cases individuals for vehicle oversight are increasingly remote from the vehicles for which they are responsible, and such individuals are no longer in direct contact with the vehicles in question, such that there is consequently a need for a mechanism whereby such individuals may receive as rich and complete a picture of the vehicles status as possible by other means.

### Summary of the invention

In accordance with the present invention in a first aspect there is provided a traffic status feedback driver adapted to interface with a human perceptible vibration transducer, the driver being adapted to receive traffic data relating to one or more remote traffic entities in a space, and to cause the transducer to emit a vibration having one or more characteristics defined in proportion to the traffic datum. This can provide supervisors with an intuitive understanding of traffic situations complementary to the explicit data provided by conventional channels.

In a development of the fist aspect, the vibration transducer is adapted to provide a haptic signal. Haptic information provides an intuitively accessible analogue to the mechanical feedback received by pilots or drivers situated within a traffic entity, supporting more direct and rapid assimilation of information. This feedback channel is typically underused, so use in this context avoids creating interference with other sources of information.

In a further development of the first aspect, the vibration transducer is adapted to provide an audible signal. Most user interfaces incorporate audio interfaces, so that this channel can be used with minimal adaptation.

In a further development of the first aspect the traffic datum is a number of entities in the space. Providing information for multiple traffic entities increases the efficiency of the supervisor and extends the benefits of an intuitive situational awareness.

In a further development of the first aspect, the driver is further adapted to receive user input data defining a space, and to redefine the space to correspond to the space defined in the user input data. The possibility of varying the space means that broader or more numerous spaces can be monitored without losing precision.

In a further development of the first aspect, the user input data is user field of view data, and the driver is adapted to redefine the space to correspond to the field of view. Directly tying the space to the user field of view advantageously accentuates the intuitive integration of information into a user's situational awareness.

In a further development of the first aspect, the driver is further adapted to filter the traffic data in accordance with one or more predefined criteria, and wherein the driver is further adapted to cause the transducer to emit a vibration having one or more characteristics defined in proportion to the filtered traffic datum.

In a further development of the first aspect the predefined criteria include a designation of one or more traffic entities.

In a further development of the first aspect the predefined criteria include a reflection of traffic entity size.

In a further development of the first aspect the predefined criteria include a categorisation of traffic entity speed.

In a further development of the first aspect the predefined criteria include a categorisation of traffic entity direction.

In a further development of the first aspect the driver further comprises a traffic model, adapted to receive extended traffic data for traffic entities in a second space, and to predict future traffic in the space on the basis of the extended traffic data, and the driver is further adapted to cause the transducer to emit a vibration having one or more characteristics defined in proportion to the predicted future traffic.

In a further development of the first aspect the traffic model is further adapted to identify the passage of any two traffic entities within a predetermined relative distance during a predetermined time window on the basis of the predicted future traffic, and whereby the driver is further adapted to cause the transducer to emit a vibration having one or more characteristics defined in proportion to the predicted future traffic data.

In a further development of the first aspect the traffic datum concerns traffic entities located in the space at a current time.

In a further development of the first aspect the traffic datum concerns traffic entities located in the space in a predefined time window preceding the current time.

In a further development of the first aspect the space is defined in a computer generated virtual environment.

In a further development of the first aspect the traffic status feedback driver is adapted to receive a plurality of traffic data relating to one or more respective remote traffic entities in one or more respective spaces, wherein the driver is further adapted to filter each traffic datum in accordance with one or more respective predefined criteria, and wherein the driver is further adapted to cause the transducer to emit a vibration reflecting a combination of respective components having one or more characteristics defined in proportion to a respective filtered traffic datum.

In a further development of the first aspect the driver is further adapted to receive a user condition indicator value, and each component in the vibration is classified in a hierarchy, and the relative contribution of each component in the vibration is determined as a function of its position in the hierarchy and a user condition.

In a further development of the first aspect, the user condition is the degree of user status (i.e. stress, workload, vigilance).

In accordance with the present disclosure, in a second aspect there is provided feedback suite comprising a driver according to the first aspect of the invention and the vibration transducer, wherein the vibration transducer is integrated in a workspace element, article of furniture, clothing, headset, computer input device.

In a third aspect there is provided a method of generating a human perceptible vibration signal, the method comprising the steps of receiving traffic data relating to one or more remote traffic entities in a space, and generating the vibration signal having one or more characteristics defined in proportion to the traffic datum.

In accordance with the present disclosure, in a fourth aspect there is provided a computer program comprising instructions adapted to implement the third aspect.

### Brief Description of the Drawings

The above and other advantages of the present invention will now be described with reference to the accompanying drawings, provided for illustration purposes only, in which:
Figure 1 shows a system of communicating entities illustrating certain embodiments;
Figure 2 shows a system of communicating entities illustrating certain embodiments;
Figure 3 shows a system of communicating entities illustrating certain embodiments;
Figure 4 shows an example of a traffic entity associated with a defined path or envelope in accordance with an embodiment;
Figure 5 shows an example of a traffic entity associated with a defined path or envelope in accordance with a further embodiment;
Figure 6 shows a system of communicating entities illustrating certain embodiments;
Figure 7 shows a method of generating a human perceptible vibration signal in accordance with an embodiment;
Figure 8 shows a generic computing system suitable for implementation of embodiments of the invention;
Figure 9 shows a smartphone device adaptable to constitute an embodiment; and
Figure 10 shows a drone cockpit adaptable to constitute an embodiment.

### Detailed description

It is an inherent property of most types of vehicle that they will provide some degree of feedback to their pilot as to the movement and status of the vehicle. Such feedback often takes the form of forces and vibrations transmitted through the chassis and controls of the vehicle. This may also include information concerning the environment around the vehicle. Although such feedback is often not a deliberate design feature, it constitutes an important source of complementary information to the pilot in addition to the formal, explicit information provided by the vehicle's instruments.

Generally speaking, secondary channels as described above are not available to third parties outside the vehicle. Where such third parties have a role as remote pilots or supervisors, the absence of such secondary information may place such a third party at a disadvantage in terms of their situational awareness.

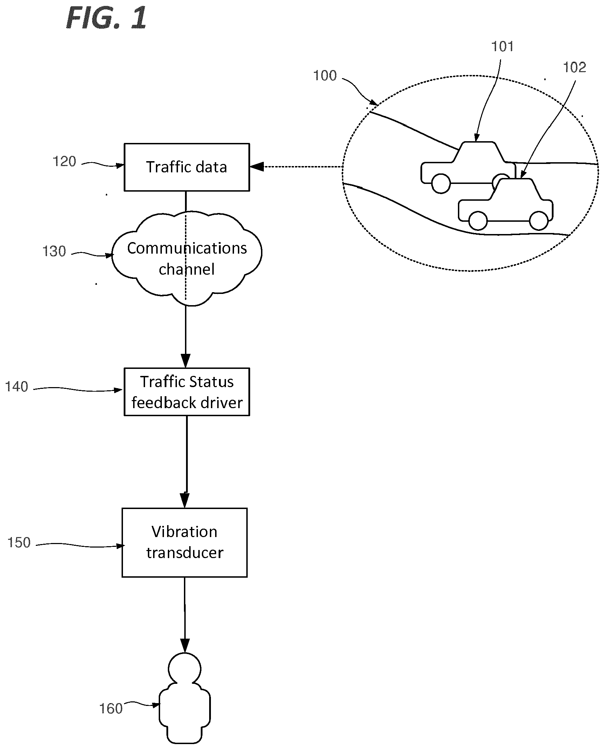

Figure 1 shows a system of communicating entities illustrating certain embodiments.

As shown in figure 1, there is provided a traffic status feedback driver 140 adapted to interface with a human perceptible vibration transducer 150.

The human perceptible vibration transducer may be an electrodynamic loudspeaker piezoelectric device, vibramotor or any other device capable of converting an electrical signal into a human perceptible vibration.

In particular, the vibration transducer may be adapted to provide a haptic or tactile or force feedback signal.

The vibration transducer may be integrated in a workspace element, article of furniture, clothing, headset, computer input device or any other convenient article for the transmission of vibration signals to the user 160.

Furthermore, the vibration transducer may be adapted to provide an audible signal.

The driver 140 is adapted to receive traffic data 120 relating to one or more remote traffic entities 101, 102 in a space 100.

The space 100 may be predefined, or defined on the fly.

The traffic datum may be a number of entities in the space 100.

The traffic datum may be the average speed of entities in the space 100.

The traffic datum may be the maximum instantaneous speed of entities in the space 100.

The traffic datum may be the size of an entity in the space 100.

The traffic datum may be the weight of an entity in the space 100.

The traffic datum may be the distance between any two entities in the space 100.

The traffic datum may be the distance between any entities and a defined reference point located in the space 100.

The traffic datum may be received from sensors or instruments aboard one or more traffic entities, or from sensors in, or directed towards the space 100. Where the traffic datum is received from sensors or instruments aboard one or more traffic entities, the datum received may concern the traffic entity in which the sensor is mounted, or any other traffic entity within the range of the sensor.

Sensors directed towards the space may comprise cameras, including satellite cameras, radar, sonar, any other such sensor capable of determining conditions inside the space 100 from outside the space.

The traffic entities may include any mobile entity, including pedestrians, road vehicles (cars, trucks, bicycles, motorbikes or the like), rail vehicles, airborne vehicles (planes, helicopters, blimps...), waterborne vehicles, and so on, and any combination of these.

The driver 140 is further adapted to cause the transducer to emit a vibration having one or more characteristics defined in proportion to the traffic datum.

The vibration will have a number of characteristics which may be varied under the control of the driver 140 as a reflection of the traffic datum 120. In particular, by way of example the intensity, frequency, waveform shape, mark- space ratio or duration of the vibration may be varied for a given traffic datum. Furthermore, any or all of these characteristics may be varied for a given traffic datum. Still further, a single emission may comprise a series of different values for one or more of these characteristics.

As such, a user 160 may receive vibration signals reflecting the status of traffic entities in the space. On the basis of a well defined coding of status conditions into vibration signals, the user may learn to subconsciously associate certain signals with certain traffic conditions, and thereby develop an improved situational awareness of traffic conditions. The fact that the vibration signal is received via a parallel channel independently of any explicit displays or instruments means that this information is complementary, and will serve to improve the user's ability to properly interpret any such explicit displays or instruments on the basis of a strong sub-conscious awareness of the situation. This in turn means that the user may more effectively and securely receive input from, or otherwise interact with multiple systems simultaneously.

While as described the traffic datum concerns traffic entities located in the space at a current time, it may also concern traffic entities located in the space in a predefined time window preceding the current time, i.e. based on recorded historical information. On this basis, as system providing or enhancing training in predefined supervision scenarios may be envisaged.

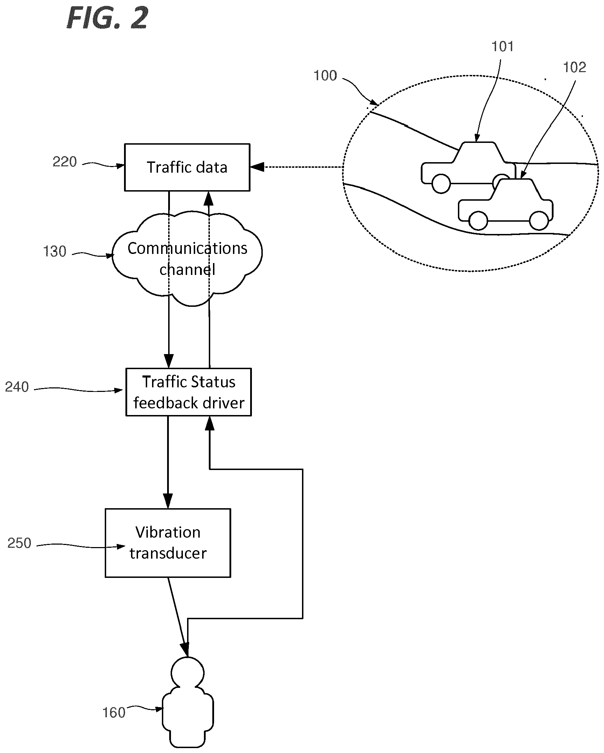

Figure 2 shows a system of communicating entities illustrating certain embodiments.

As shown in figure 2, there is provided a traffic status feedback driver 240 with capacities similar to those of feedback driver 140 as described above.

The traffic status feedback driver 240 is adapted to interface with a human perceptible vibration transducer 250, with capacities similar to those of vibration transducer 150 as described above.

Furthermore, as shown on figure 2, the feedback driver 240 is further adapted to receive user input data defining a space, and to redefine the space to correspond to the space defined in the user input data.

On this basis, the user may monitor a number of separate spaces, or may incrementally adjust the space under monitoring.

The user input data defining the field of view may be user field of view data, such that the driver is adapted to redefine the space to correspond to the field of view. This field of view information may be obtained by eye tracking technologies, or associated with a helmet, headset or goggles worn by the user, or otherwise. Still further if the user is operating another interface associated with a field of view such as a GNSS or other mapping display, RADAR, SONAR, LIDAR, or the like, the field of view may be automatically adjusted to correspond to that of that other interface. The space may be defined and/or represented in a computer generated virtual environment.

According to still further embodiments, the space may be redefined automatically, for example by the driver 240, so as to follow a programmed path, to sequentially cover a series of separate spaces, to follow a particular traffic entity as it moves, and so on.

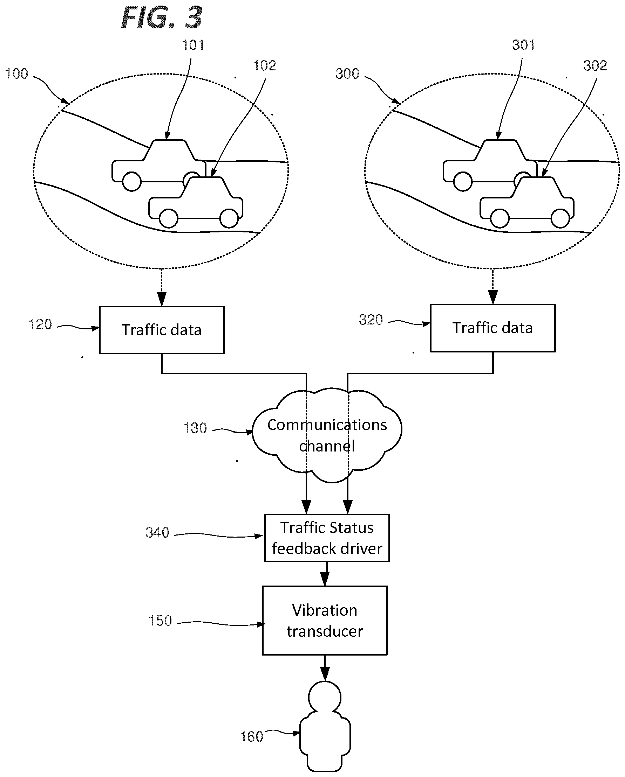

Figure 3 shows a system of communicating entities illustrating certain embodiments.

As shown in figure 3, there is provided a traffic status feedback driver 340 with capacities similar to those of feedback driver 140 as described above.

The driver is adapted to interface with a human perceptible vibration transducer 150, with capacities similar to those of vibration transducer 150 as described above.

Furthermore, as shown the feedback driver 340 is further adapted to receive respective traffic data sets 120 and 320 from two respective spaces 100 (containing traffic entities 101 and 102) and 300 (containing traffic entities 301, 302).

The feedback driver may be adapted to process input from both spaces 100 and 300. The feedback driver may process the two sets of data 120 and 320 if they concerned the same space, or may apply differential processing so that vibration signals pertaining to one space have a characteristic perceptible difference whereby the user can distinguish signals relating to one space or the other. Examples of characteristics perceptible differences include but are not limited to the frequency of the signal, a mark-space ratio of the signal, or the wave form of the signal. The waveform may be drawn from a set of defined waveforms corresponding to different situations. For example, waveforms might encode a Morse code signal or the like, or any arbitrary set of signals as may suite the type of information to be conveyed.

Any number of spaces may be managed in this manner.

In any of the foregoing embodiments or otherwise, the traffic data sets 120 or 320 may be filtered in accordance with one or more predefined criteria and the driver 140, 240, 340 may be further adapted to cause the transducer to emit a vibration having one or more characteristics defined in proportion to the filtered traffic datum.

The predefined criteria on the basis of which the traffic data are filtered, may include a designation of one or more specific traffic entities. On this basis, while the traffic data may include information concerning a large number of traffic entities, the vibration emitted to the user may be defined based solely on certain traffic entities of special interest. These traffic entities of special interest may be defined ad hoc for example on the basis of input from the user, or may be predefined on the basis of known categories of traffic entities, such as those belonging to a particular undertaking, those with a particular destination or origin, those heading in a particular direction and/or in a particular speed range, those of a particular type of traffic entity, those of a particular size, power rating or other physical characteristic, or any arbitrary grouping, for example as a means for isolating vehicles assigned to the user for supervision.

One further example of traffic data as discussed above may comprise a distance of a traffic entity from a point belonging to a defined path or envelope, which the traffic entity is expected to respect.

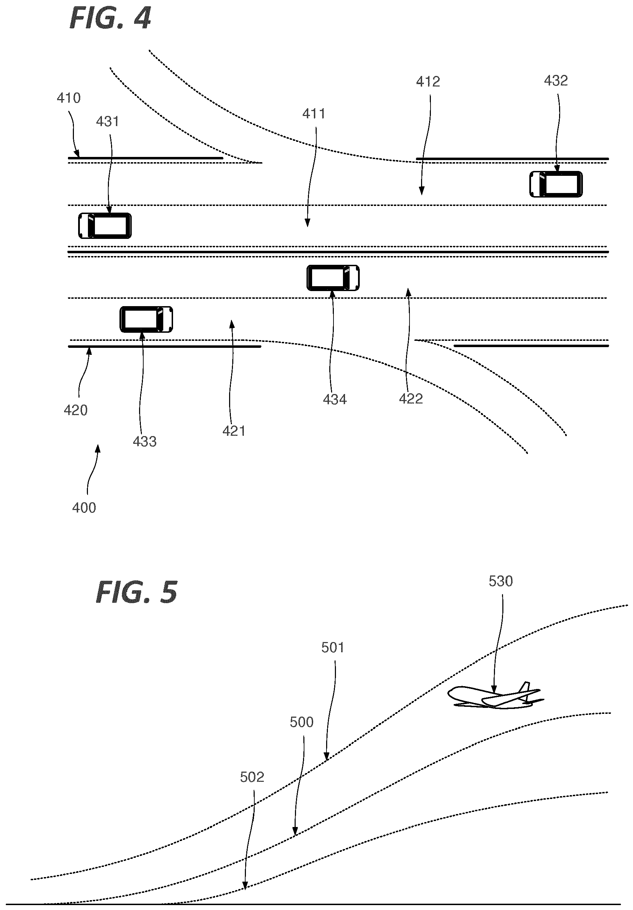

Figure 4 shows an example of a traffic entity associated with a defined path or envelope in accordance with an embodiment. As shown in figure 4, there is provided a section of road 400, having two lanes 411, 412 in a first direction 410 (right to left), and two lanes 421, 422 in a second direction 420 (left to right). A traffic entity shown as a car 431 is shown as travelling in the first lane 411 in the first direction 410, a traffic entity shown as a car 432 is shown as travelling in the second lane 412 in the first direction 410, a traffic entity shown as a car 433 is shown as travelling in the first lane 421 in the second direction 420, and a traffic entity shown as a car 434 is shown as travelling in the second lane 422 in the second direction 420. The road section 400, or alternatively a road direction 410 or 420, or a lane 411, 412, 421 or 422 may correspond to the space 100 as discussed above.

In accordance with certain embodiments, the traffic datum as discussed above may comprise a distance of a traffic entity from a point belonging to a defined path or envelope, which the traffic entity is expected to respect. On the basis of the example of figure 4, the envelope might correspond to the lines demarcating the edge of the lane a vehicle is travelling in at any given time. Alternatively, the path might correspond to the center line of the lane a vehicle is travelling in at any given time.

It may also be envisaged that the envelope might correspond to the lines demarcating the edge of the set of lanes in a particular direction in which a vehicle is travelling in at any given time.

Still further, these two possibilities exemplify the possibility of establishing a hierarchy of data, where the distance of the traffic entity from the edge of its current lane is a low priority traffic datum which may be translated into a low intensity vibration for example, whilst the distance of the traffic entity from the edge of the set of lanes in its current direction translates into a higher intensity signal.

It will be appreciated that the nature of the vibration signal need not be varied in a linear manner - any kind of transfer function may be imagined, for example, in the case of figure 4 it may be appropriate to emit no signal at all for traffic entities within a safe distance of the edge or their envelopes, and/or to generate a signal rapidly rising in urgency as the traffic entity approaches the edge of the envelope. This relationship may be defined by a mathematical function, an arbitrary transfer function, or merely a binary relationship where a particular vibration is initiated when a particular threshold is crossed.

The envelope may be defined on the basis of the direction of a user's gaze, for example as determined by a gaze tracking device, virtual reality goggles, or the like as discussed below.

By way of example, the vibration signal may have a vibration magnitude that is inversely proportional to the angle between the user's gaze and the actual object location. The magnitude may be maximal when this angle is close to 0, and minimal when it is beyond a threshold (such as 15°, 30°, 45° or any other convenient angle). By this means, depending on the focus of the user's gaze, the relative contribution to the final signal from multiple entities will vary as a function of the distance of each such entity from the axis of the user's gaze.

Other characteristics of the vibration signal such as phase, frequency, mark space ratio or otherwise can be also modulated to encompass multiple moving entities close to the user's line of gaze. In this case, the vibration may code to the number of moving objects.

Figure 5 shows an example of a traffic entity associated with a defined path or envelope in accordance with a further embodiment. As shown in figure 5, there is provided a section of an aircraft's flight path, in particular a landing approach path. As shown, the flight path is defined in terms of an upper limit 501, a lower limit 502, and a planned path 500 generally corresponding to the median between the two limits. The traffic datum may thus correspond for example to the distance of the traffic entity 530 from the planned path 500, or its proximity to the edge of the envelope defined by the upper limit 501 and lower limit 502.

While for the sake of simplicity, figure 5 shows a vertical cross section describing the flight path in a single plane, it will be appreciated that the same approach may be extended to a three-dimensional path or envelope.

Similarly, it will be appreciated that the features of any of the preceding embodiments may be combined. For example, traffic data corresponding to the position of a traffic entity with respect to a path or envelope may be combined with data reflecting other characteristics of the traffic entities as discussed with reference to figures 1 to 3. Similarly, a hierarchy of envelopes or paths may be defined for three dimensional or aerial traffic. Thus more generally, there is provided a driver adapted to receive a plurality of traffic data relating to one or more respective remote traffic entities in one or more respective spaces, wherein the driver is further adapted to filter each traffic datum in accordance with one or more respective predefined criteria, and wherein the driver is further adapted to cause the transducer to emit a vibration reflecting a combination of respective components having one or more characteristics defined in proportion to a respective filtered traffic datum.

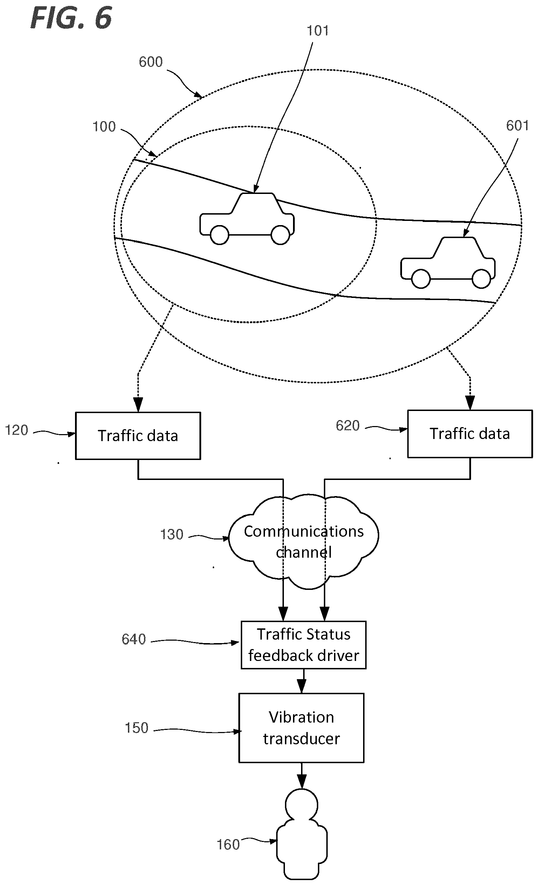

Figure 6 shows a system of communicating entities illustrating certain embodiments. As shown in figure 6, there is provided a traffic status feedback driver 640 with capacities similar to those of feedback driver 140 as described above, and is adapted to interface with a human perceptible vibration transducer 150, with capacities similar to those of vibration transducer 150 or 250 as described above.

Furthermore, as shown, the feedback driver 640 is further adapted to receive respective traffic data 120 and 620 from a first space 100 (containing traffic entity 101) and a second space 600 containing traffic entities 601, and also containing the first space 100.

The feedback driver 640 may thus be adapted to process input from both spaces 100 and 600. In particular, there may be provided a traffic model, adapted to receive traffic data for traffic entities 601 in the second space 600, and to predict future traffic in the first space 100 on the basis of the traffic data from the second space 600. On this basis, the driver 640 may be further adapted to cause the transducer 150 to emit a vibration having one or more characteristics defined in proportion to the predicted future traffic.

On this basis, the system may provide advance notice of projected events such as the projected arrival of a new traffic entity 601 in the monitored space.

The traffic model may further be adapted to identify the passage of any two traffic entities within a predetermined relative distance during a predetermined time window on the basis of the predicted future traffic, and whereby the driver 640 is further adapted to cause the transducer to emit a vibration having one or more characteristics defined in proportion to the predicted future traffic data.

While as discussed above in certain embodiments, the user 160 may submit explicit instruction, for example by manual controls or a computer user interface, in order to set the space, to select or define filter values, and the like, in certain further variants there may additionally be provided user condition sensors. These sensors may be disposed in proximity with the user, for example by integration in a cloth, glasses, watch, headband, armband, seat, control device such as a mouse or joystick, which may or may not also house the vibration transducer as discussed above. The sensors may also comprise systems already present in the user systems, such as a microphone capturing the users voice, which may be analysed to obtain various status indicators such as stress or fatigue. The sensors may also comprise indicators of other system activity. For example, where the user receives tasks and information via a computer user interface, the computer system may additionally be adapted to derive indicators of user workload from this same flow of tasks and information.

These sensors may comprise a heart rate monitor, blood pressure monitor, temperature sensor, perspiration sensor, blood sugar level sensor, eye pupil dilation sensor, eye motion sensor, brain activity sensor, or any other sensor adapted to determine the state of the user, or any combination of these sensors. In certain embodiments, the sensor or combination of sensors may be particularly selected as providing indications of the degree of stress, fatigue or distraction encountered by the user 160 at any given time. In certain embodiments, the driver 140, 240, 340, 640 may be adapted to determine an assessment of user availability on the basis of the signals from these user condition sensors, and use this user availability assessment as an additional filter for the formulation of the vibration signal. For example, the intensity of the vibration may be momentarily ramped up when it is determined that the user's attention has wandered.

In certain variants, different traffic data received concerning traffic entities according to any preceding embodiment may be sorted by urgency or importance levels. Urgent traffic data may comprise data indicating an impending collision in the near future, a call for assistance, a detected critical fault condition in a traffic entity, and the like. This sorting by urgency or importance may constitute an additional filter for the formulation of the vibration signal. For example, the vibration signal may be constituted solely on the basis of traffic data meeting a predetermined urgency or importance threshold. The threshold may be set during manufacturing phases, automatically based on predefined criteria, remotely by a control unit, or by the user 160 as required.

In still further variants, the preceding two approaches may be combined, such that the relative contribution of each component in the vibration signal is determined as a function of its position in a hierarchy and of the user condition. For example, if it is determined that the user's attention level is degraded, or that he is at a high level of stress, the vibration signal may be constituted on the basis of only the most important or urgent data signal.

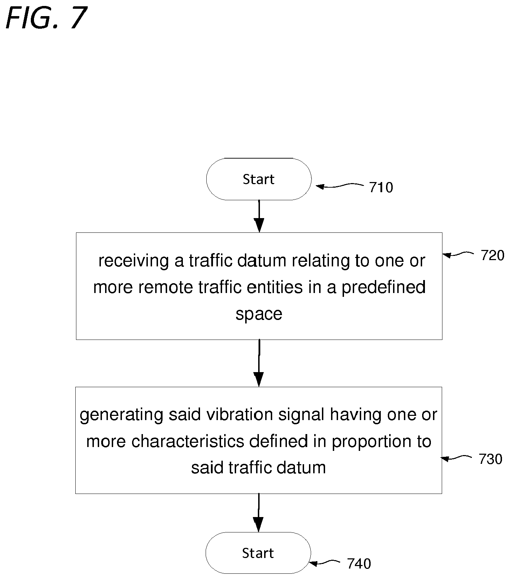

Figure 7 shows a method of generating a human perceptible vibration signal in accordance with an embodiment. As shown, the method starts at step 710 before proceeding to step 720 at which traffic data relating to one or more remote traffic entities in a space are received. The method then proceeds to step 730 at which a vibration signal having one or more characteristics defined in proportion to the traffic data are generated.

Additional steps corresponding to any of the functions ascribed to the driver 140, 240, 340, 640 above, or the transducer 150, or any other component as described above may be provided.

Thus, according to certain embodiments, traffic status feedback is provided by a driver adapted to interface with a human perceptible vibration transducer either as a haptic or audio signal, by causing the transducer to emit a vibration having one or more characteristics defined in proportion to traffic data. The traffic data may relate to a particular space, and be modulated as a function of their position in that space. By compiling a signal concerning multiple traffic entities or other traffic data, a user can be provided with a concentrated representation of complex data, which the user will come instinctively to interpret.

In the context of this disclosure, software embodiments include but are not limited to application, firmware, resident software, microcode, etc. The disclosed solution can take the form of a computer program product accessible from a computer-usable or computer-readable medium providing program code for use by or in connection with a computer or an instruction execution system. Software embodiments include software adapted to implement the steps discussed above with reference to figure 7.

A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

In some embodiments, the methods and processes described herein may be implemented in whole or part by a user device. These methods and processes may be implemented by computer-application programs or services, an application-programming interface (API), a library, and/or other computer-program product, or any combination of such entities.

The user device may be a mobile device such as a smart phone or tablet, a drone, a computer or any other device with processing capability, such as a robot or other connected device, including loT (Internet of Things) devices.

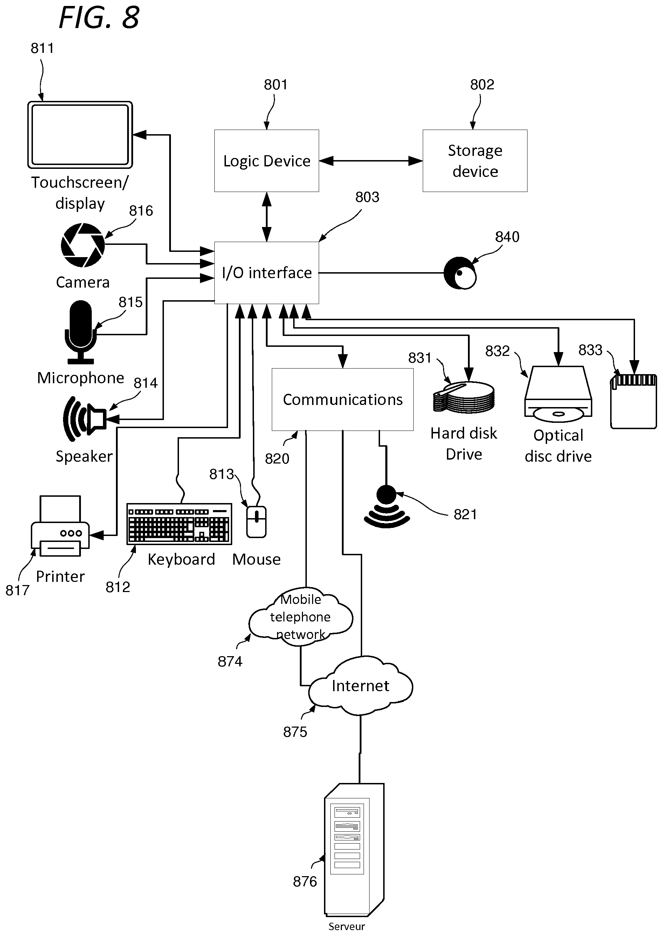

Figure 8 shows a generic computing system suitable for implementation of embodiments of the invention.

A shown in figure 8, a system includes a logic device 801 and a storage device 802. The system may optionally include a display subsystem 811, input/output subsystem 803, communication subsystem 820, and/or other components not shown.

Logic device 801 includes one or more physical devices configured to execute instructions. For example, the logic device 801 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic device 801 may include one or more processors configured to execute software instructions. Additionally, or alternatively, the logic device may include one or more hardware or firmware logic devices configured to execute hardware or firmware instructions. The system of figure 8 may be used to implement embodiments of the invention.

For example, a program implementing the steps described with respect to figure 7, or the algorithms presented above may be stored in storage device 802 and executed by logic device 801. The web browser and its various functions, or the functions of any or all of the units 140, 240, 340 or 640 may similarly be implemented by a program performing the required functions, in communication with additional dedicated hardware units as necessary. The display 811 may display the graphical representation of the graph, and/or the path, and may receive the user input defining the path through a touch screen interface, or through the mouse, camera other interface device as described herein. Accordingly, the invention may be embodied in the form of a computer program. The transducer 150 may be embodied in the loudspeaker 814 or vibromotor 840 by way of example.

When included, display subsystem 811 may be used to present a visual representation of data held by a storage device. This visual representation may take the form of a graphical user interface (GUI). As the herein described methods and processes change the data held by the storage device 802, and thus transform the state of the storage device 802, the state of display subsystem 811 may likewise be transformed to visually represent changes in the underlying data. Display subsystem 811 may include one or more display devices utilizing virtually any type of technology for example as discussed above. Such display devices may be combined with logic device and/or storage device in a shared enclosure, or such display devices may be peripheral display devices. An audio output such as speaker 814 may also be provided.

When included, input subsystem may comprise or interface with one or more user-input devices such as a keyboard 812, mouse 813, touch screen 811, or game controller (not shown). In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone 815 for speech and/or voice recognition; an infrared, colour, stereoscopic, and/or depth camera 816 for machine vision and/or gesture recognition; a head tracker, eye tracker, accelerometer, and/or gyroscope for motion detection and/or intent recognition; as well as electric-field sensing componentry for assessing brain activity. The input/output interface 803 may similarly interface with a loudspeaker 814, vibromotor 840 or any other transducer device as may occur to the skilled person. For example, the system may interface with a printer 817.

When included, communication subsystem 820 may be configured to communicatively couple computing system with one or more other computing devices. For example, communication module of communicatively couple computing device to remote service hosted for example on a remote server 876 via a network of any size including for example a personal area network, local area network, wide area network, or internet. Communication subsystem may include wired and/or wireless communication devices compatible with one or more different communication protocols. As non-limiting examples, the communication subsystem may be configured for communication via a wireless telephone network 874, or a wired or wireless local- or wide-area network. In some embodiments, the communication subsystem may allow computing system to send and/or receive messages to and/or from other devices via a network such as Internet 875. The communications subsystem may additionally support short range inductive communications with passive or active devices (NFC, RFID, UHF, etc). In certain variants of the embodiments described above, the traffic data may be received via the telephone network 874 or Internet 875.

The system of figure 8 is intended to reflect a broad range of different types of information handling system. It will be appreciated that many of the subsystems and features described with respect to figure 8 are not required for implementation of the invention, but are included to reflect possible systems in accordance with the present invention. It will be appreciated that system architectures vary widely, and the relationship between the different sub-systems of figure 8 is merely schematic, and is likely to vary in terms of layout and the distribution of roles in systems. It will be appreciated that, in practice, systems are likely to incorporate different subsets of the various features and subsystems described with respect to figure 8.

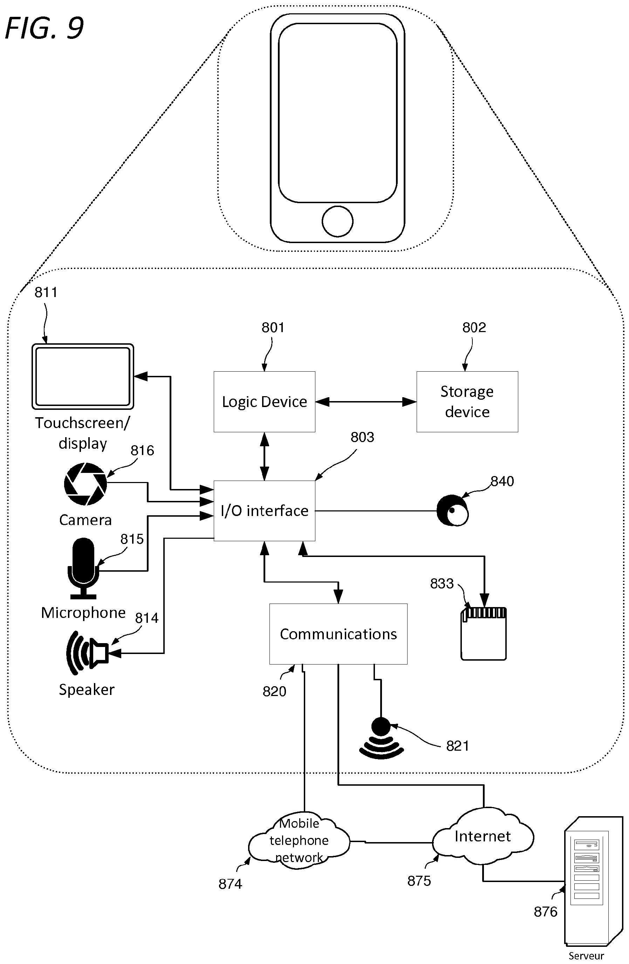

Figure 9 shows a smartphone device adaptable to constitute an embodiment. As shown in figure 9, the smartphone device incorporates elements 801, 802, 803, 820, optional near field communications interface 821, flash memory 833 and elements 814, 815, 816, 840 and 811 as described above. It is in communication with the telephone network 874 and a server 876 via the network 875. Alternative communication mechanisms such as a dedicated network or Wi-Fi may also be used. The features disclosed in this figure may also be included within a tablet device as well.

Figure 9 shows a smartphone device adaptable to constitute an embodiment. As shown in figure 9, the smartphone device incorporates elements 801, 802, 803, 820, optional near field communications interface 821, flash memory 833 and elements 814, 815, 816, 840 and 811 as described above. It is in communication with the telephone network 874 and a server 876 via the network 875. Alternative communication mechanisms such as a dedicated network or Wi-Fi may also be used. The features disclosed in this figure may also be included within a tablet device as well.

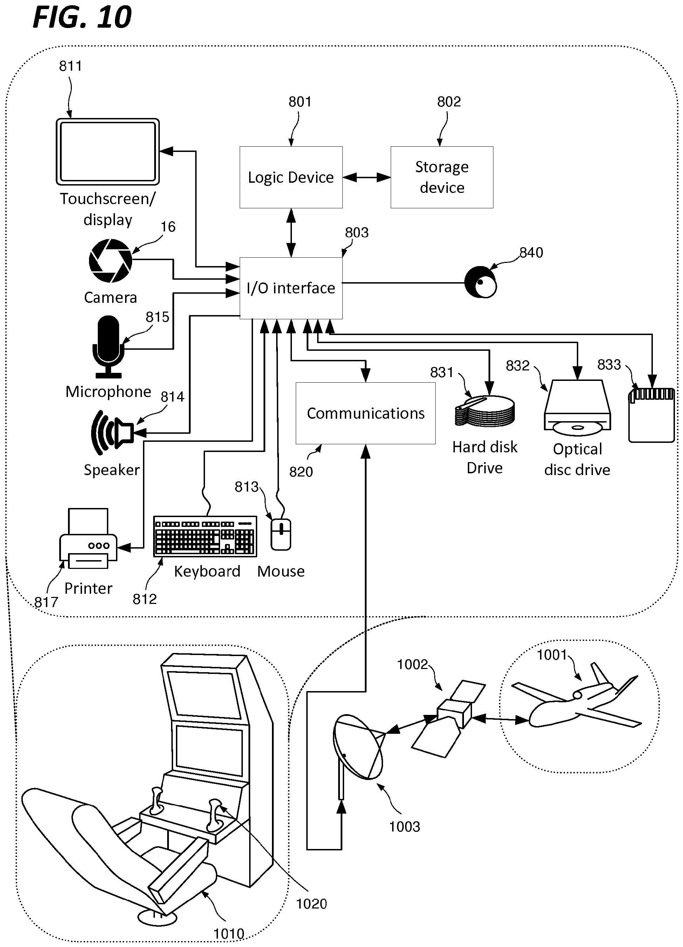

Figure 10 shows a drone cockpit adaptable to constitute an embodiment. As shown in figure 10, the drone cockpit comprises elements 801, 802, 803, 820, 814, 815, 816, 811, 831, 832, 833, 840 as described above. As shown it is in communication with a drone 1001 via a communications satellite 1002 and a radio antenna 1003 coupled to the communications interface 820. As shown, the cockpit comprises a seat 1010, and joysticks 1020, either of which may constitute suitable locations for any user status sensors and/or vibration transducers as discussed above. Alternative communication mechanisms may also be used.

Further embodiments may be based on or include immersive environment devices such as the HTC vive, Oculus rift, etc., or other hybrid device such as the Hololens Meta vision 2.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A traffic status feedback driver adapted to interface with a human perceptible vibration transducer,
the driver being adapted to receive traffic data relating to one or more remote traffic entities in a space, and to cause the transducer to emit a vibration having one or more characteristics defined in proportion to the traffic datum.

2. The driver of claim 1 wherein the vibration transducer is adapted to provide a haptic signal.

3. The driver of claim 1 or 2 wherein the vibration transducer is adapted to provide an audible signal.

4. The driver of any preceding claim wherein the traffic datum is a number of entities in the space.

5. The driver of any preceding claim wherein the driver is further adapted to receive user input data defining a new space, and to redefine the space to correspond to the new space defined in the user input data.

6. The driver of any preceding claim wherein the user input data is user field of view data, and wherein the driver is adapted to redefine the space to correspond to the field of view.

7. The driver of any preceding claim wherein the driver is further adapted to filter the traffic data in accordance with one or more criteria, and wherein the driver is further adapted to cause the transducer to emit a vibration having one or more characteristics defined in proportion to the filtered traffic datum.

8. The driver of any preceding claim further comprising a traffic model, adapted to receive extended traffic data for traffic entities in a second space, and to predict future traffic in the space on the basis of the extended traffic data, and whereby the driver is further adapted to cause the transducer to emit a vibration having one or more characteristics defined in proportion to the predicted future traffic.

9. The driver of claim 8, wherein the traffic model is further adapted to identify the passage of any two traffic entities within a predetermined relative distance during a predetermined time window on the basis of the predicted future traffic, and whereby the driver is further adapted to cause the transducer to emit a vibration having one or more characteristics defined in proportion to the predicted future traffic data.

10. The driver of any preceding claim wherein the space is defined in a computer generated virtual environment.

11. The driver according to any preceding claim wherein the traffic status feedback driver is to receive a plurality of traffic data relating to one or more respective remote traffic entities in one or more respective spaces, wherein the driver is further adapted to filter each traffic datum in accordance with one or more respective predefined criteria, and wherein the driver is further adapted to cause the transducer to emit a vibration reflecting a combination of respective components having one or more characteristics defined in proportion to a respective the filtered traffic datum.

12. The driver of claim 11 wherein the driver is further adapted to receive a user condition indicator value, and each component in the vibration is classified in a hierarchy, and the relative contribution of each component in the vibration is determined as a function of its position in the hierarchy and a user condition.

13. A feedback suite comprising a driver according to any preceding claim and the vibration transducer, wherein the vibration transducer is integrated in a workspace element, article of furniture, clothing, headset, computer input device.

14. A method of generating a human perceptible vibration signal, the method comprising the steps of receiving traffic data relating to one or more remote traffic entities in a space, and generating the vibration signal having one or more characteristics defined in proportion to the traffic datum.

15. A computer program comprising instructions adapted to implement the method of claim 14.
